# FASCICULE DE BREVET EUROPEEN

(11) **EP 0 462 875 B1**
(45) Date de publication et mention de la délivrance du brevet: **21.09.1994**
(21) Numéro de dépôt: 91401589.6
(22) Date de dépôt: 14.06.1991
(51) Int. Cl.: B01F 7/04, B01F 13/02

(54) **Dispositif de pressurisation d'émulsion comportant une phase solide, une phase liquide et une phase gazeuse**
Vorrichtung zur Unterdrucksetzung einer Emulsion mit einer festen Phase, einer flüssigen Phase und einer Gasphase
Device for pressurising an emulsion having a solid phase, a liquid phase and a gas phase

(30) Priorité: 19.06.1990 FR 9007648
(43) Date de publication de la demande: 27.12.1991
(73) Titulaire: Société des Techniques en Milieu Ionisant (STMI), F-91000 Gif-sur-Yvette (FR); L'ASSOCIATION GRADIENT, F-60206 COMPIEGNE CEDEX (FR)
(72) Inventeur: François, Olivier, F-60200 Compiègne (FR); Antonini, Gérard, F-75012 Paris (FR); Dhee,Alain, B-7503 Froyennes (BE)
(74) Mandataire: Robert, Jean-Pierre

(56) Documents cités:
- EP-A- 0 053 759
- DE-A- 2 653 711
- DE-A- 2 658 243
- DE-C- 422 986
- DE-C- 486 215
- GB-A- 1 124 601
- NL-A- 6 516 215
- US-A- 3 138 167
- US-A- 3 194 504

## Description

Le transport d'un solide finement divisé (un solide pulvérulent) peut s'effectuer de trois manières différentes. Une première méthode consiste à placer le solide divisé dans une veine gazeuse : il s'agit du transport pneumatique. Les contraintes et les limites d'un tel procédé exigent que le solide soit sec pour s'écouler correctement et qu'il ne soit pas réactif à l'égard du gaz porteur pour éviter les explosions. La seconde méthode est hydraulique. Le solide est placé en suspension dans un liquide (généralement de l'eau) dans les plus fortes proportions possibles. L'aptitude de la boue ainsi formée à être pompée constitue la limite de concentration du solide dans le liquide qui se situe aux environs de 40-50 % . Le produit résultant contient, pour certaines applications, trop de liquide pour son exploitation ultérieure.

Une dernière méthode enfin consiste à former une émulsion liquide gaz pour transporter le solide. Il s'agit d'un produit intermédiaire entre la veine pneumatique chargée et la boue,dans lequel on peut atteindre une concentration en poids de solide de l'ordre de 80 %. Le volume de ces mousses (en général aqueuses) chargées de matière pulvérulente, est environ le double de celui du solide seul. Cet état exclut d'envisager la préparation de ce produit en un site éloigné de sa destination finale, le transport par citerne mobile serait prohibitif. Il faut donc pouvoir préparer un tel produit à proximité du site d'utilisation pour le véhiculer dans des tuyauteries.

Les documents FR-A-2 543 968 et 2 543 967 traitent de cette troisième méthode, l'un décrivant un procédé de préparation d'une mousse aqueuse chargée d'une matière solide pulvérulente, l'autre y ajoutant une phase de pressurisation de la mousse ainsi préparée qui remédie aux inconvénients d'une mousse chargée à pression atmosphérique. Des travaux ont en effet montré que les mousses aqueuses chargées ne peuvent pas être pompées par des équipements classiques sans que le mélange se dégrade (destruction de la mousse, production de grumeaux...) Ces ruptures d'homogénéité sont incompatibles avec des applications ultérieures telle qu'une pulvérisation. En effet, la mousse aqueuse chargée doit dans ce cas passer à travers un orifice de faible diamètre qui se bouche, provoquant des discontinuités du jet si le mélange fourni est altéré.

En revanche, une mousse pressurisée est autopropulsive car le gaz comprimé qu'elle contient assure la détente du mélange depuis la zone pressurisée de préparation (réservoir) vers les zones d'utilisation de plus faible pression dans lesquelles la mousse est injectée ou pulvérisée.

Il n'est donc plus nécessaire de mettre en oeuvre des pompes et la technique se rapproche du transport pneumatique avec ses avantages quant aux vitesses possibles (aussi faibles que voulues) et sans ses inconvénients liés aux risques d'explosion. Le produit grâce à la présence d'eau est rendu inerte.

Un exemple d'application est l'alimentation de réacteurs à lits fluidisés pressurisés. La technique pneumatique actuelle présente des inconvénients, car les équipements nécessaires sont complexes et se bouchent fréquemment. La technique hydraulique n'est pas applicable car la quantité d'eau introduite dans le réacteur est trop importante et nuit à l'entretien du lit (et à la combustion, si le réacteur est une chaudière et le solide du charbon).

Cependant, on a relevé de nombreux problèmes lors de l'application de l'enseignement de la technique du brevet concernant les mousses pressurisées. On a constaté en effet que, malgré l'agitation de la mousse atmosphérique lors de sa phase de pressurisation, il fallait procéder à une introduction très lente du gaz si on souhaite éviter la formation de grumeaux ou la destruction de la mousse, ces grumeaux étant formés de manière irréversible. Cette lenteur (plusieurs heures) pour atteindre une pressurisation de quelques bars constitue un handicap très sérieux à l'industrialisation du procédé.

La présente invention entend remédier à cet inconvénient en proposant un appareillage de pressurisation d'une mousse atmosphérique chargée de matériau pulvérulent dans lequel les moyens particuliers d'introduction de l'air de pressurisation et de brassage du mélange permettent de diviser par cent les temps de préparation du produit sans altération du produit.

A cet effet, l'invention a donc pour objet un dispositif de pressurisation d'une mousse chargée d'un matériau pulvérulent comportant une enceinte sensiblement cylindrique résistant à la pression pourvue d'une ouverture d'admission de la mousse à la pression atmosphérique équipée de moyens d'agitation et de moyens d'introduction d'un gaz comprimé, caractérisé en ce que les moyens d'agitation comportent un ruban hélicoïdal s'étendant au voisinage des parois latérales de l'enceinte et entraîné en rotation à l'intérieur de l'enceinte, tandis que les moyens d'introduction du gaz sous pression comportent une tubulure centrale d'amenée du gaz sous pression, le long de laquelle sont implantés des injecteurs radiaux creux pourvus d'au moins un orifice de distribution du gaz dans le volume intérieur de l'enceinte, la tubulure étant attelée à un organe moteur pour son entraînement en rotation autour de son axe dans un sens contraire à celui de l'arbre d'entraînement du ruban hélicoïdal.

La vitesse de rotation du ruban sera de préférence inférieure à celle de la tubulure.

Afin de favoriser une bonne introduction de l'air sous pression, le ruban comporte une pluralité de dents s'étendant radialement en direction de la tubulure d'amenée du gaz sous pression, ces dents étant intercalées entre les injecteurs radiaux.

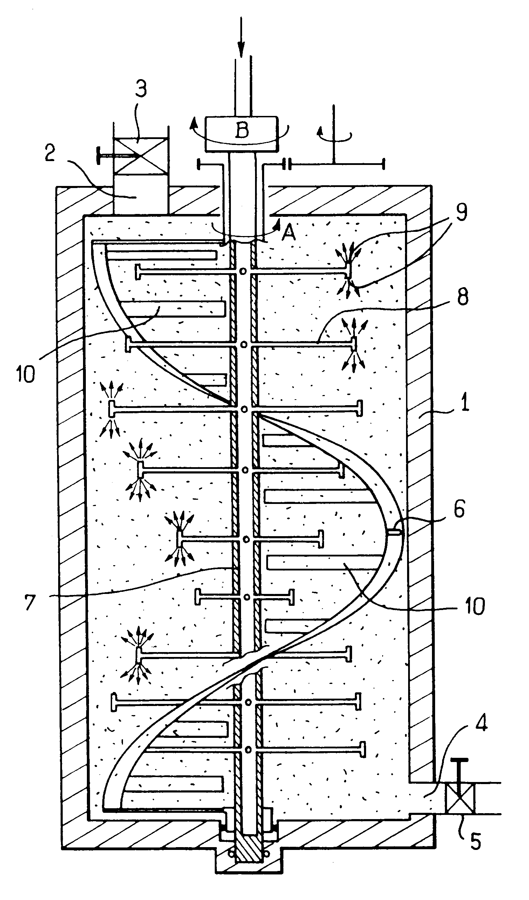

D'autres particularités et avantages de l'invention ressortiront de la description donnée ci-après à titre d'exemple et en relation avec les dessins annexés dans lesquels la figure unique est une vue en coupe du dispositif selon l'invention.

L'enceinte 1 représentée est cylindrique et susceptible de résister à la pression. Elle comporte une ouverture supérieure 2 d'admission d'une mousse chargée équipée d'un dispositif 3 de fermeture, et d'une ouverture 4 de soutirage, équipée également d'un dispositif 5 de fermeture.

Un agitateur 6, constitué par un ruban formé en hélice au voisinage de la surface interne de la paroi latérale de l'enceinte 1, est monté tournant dans cette enceinte dans le sens de la flèche A, de sorte que la mousse chargée soit remontée le long des parois latérales et redescende au centre.

Un tube central 7 est disposé le long de l'axe central de l'enceinte, coaxialement à l'agitateur 6 et est d'une part connecté à une source de gaz sous pression (non représentée) et, d'autre part, relié à un dispositif moteur pour son entraînement en rotation autour de son axe dans le sens de la flèche B (contraire à celui A de rotation de l'agitateur).

Ce tube, bouché à son extrémité inférieure, comporte une pluralité d'injecteurs radiaux 8 qui débouchent dans l'enceinte par des orifices d'extrémité 9 équipés d'un matériau poreux diffuseur, Ces injecteurs sont des tubes communiquant avec le tube central 7.

La longueur de ces tubes peut être différente d'un tube à l'autre de manière à disperser dans la totalité du volume de mousse chargée le gaz sous pression introduit. De manière préférée, ces tubes sont disposés à raison de quatre perpendiculaires les uns aux autres par niveau le long du tube central 7. Bien entendu, on pourrait prévoir en guise d'injecteurs, des rampes d'orifices d'injection à la place des tubes 8, ces orifices étant ménagés dans n'importe quelle orientation sur ces rampes.

Enfin, pour améliorer l'incorporation homogène du gaz sous pression dans la mousse chargée, on a équipé le ruban hélicoïdal 6 d'une pluralité de palettes 10 qui sont dirigées vers le tube 7 et intercalées entre les plans contenant les injecteurs.

Le fonctionnement de l'appareil consiste d'abord à admettre dans l'enceinte 1 de la mousse chargée de matière pulvérulente, réalisée conformément à l'art antérieur rappelé ci-dessus, par l'ouverture de chargement 2. Après avoir fermé cette ouverture, on anime en rotation l'agitateur 6 dans le sens A et le tube 7 avec ses injecteurs 8 dans le sens B, la vitesse de rotation du tube étant nettement supérieure à celle de l'agitateur (par exemple de 30 à 300 t/minute contre 5 à 60 tours par minute pour le ruban hélicoïdal), et on admet de l'air sous pression dans les tubes 7 et 8. Cet air diffuse lentement au travers du matériau poreux qui équipe les orifices d'injection 9 et est incorporé de manière divisée et homogène dans la mousse. On parvient ainsi à augmenter la pression de la mousse de plusieurs bars sans former ni grumeaux ni grosses bulles, ce qui préserve la stabilité de la mousse. Ce résultat est en outre obtenu toutes choses égales par ailleurs, au terme d'un temps environ 100 fois inférieur à la pressurisation décrite dans l'art antérieur.

On réalise ainsi un "batch" de mousse pressurisé qui peut être raccordé, par le canal de soutirage 4, au réacteur d'utilisation, soit directement, soit après un déplacement.

La mousse contenue dans l'enceinte étant auto-propulsive, il faut bien entendu que la pression obtenue soit nettement supérieure à celle du réacteur, récepteur en aval pour qu'un transfert puisse s'opérer sans perte de matière résiduelle dans l'enceinte. Le débit d'injection est réglé par une vanne de laminage connue en elle-même.

## Revendications

1. Dispositif de pressurisation d'une mousse chargée d'un matériau pulvérulent, comportant une enceinte (1) sensiblement cylindrique résistant à la pression pourvue d'un ouverture (2) d'admission de la mousse à la pression atmosphérique équipée de moyens d'agitation et de moyens d'introduction d'un gaz comprimé, caractérisé en ce que les moyens d'agitation comportent un ruban (6) hélicoïdal s'étendant au voisinage des parois latérales de l'enceinte (1) et entraîné en rotation à l'intérieur de l'enceinte, tandis que les moyens d'introduction du gaz sous pression comportent une tubulure (7) centrale d'amenée du gaz sous pression le long de laquelle sont implantés des injecteurs radiaux (8) creux pourvus d'au moins un orifice (9) de distribution du gaz dans le volume intérieur de l'enceinte (1) la tubulure étant attelée à un organe moteur pour son entraînement en rotation autour de son axe dans un sens contraire à celui du ruban hélicoïdal (6).

2. Dispositif selon la revendication 1 caractérisé en ce que le ruban (6) et la tubulure (7) sont entraînés de telle sorte que la vitesse de rotation du ruban (6) est inférieure à celle de la tubulure (7).

3. Dispositif selon la revendication 1 ou la revendication 2 caractérisé en ce que le ruban comporte une pluralité de palettes (10) s'étendant radialement en direction de la tubulure (7) d'amenée du gaz.

4. Dispositif selon la revendication 3 caractérisé en ce que les injecteurs radiaux (8) sont à des altitudes différentes de celle de chacune des palettes radiales (10).

5. Dispositif selon l'une quelconque des revendications précédentes, caractérisé en ce que chaque orifice (9) d'injecteur est équipé d'un diffuseur en matière poreuse.

6. Dispositif selon la revendication 5 caractérisé en ce que chaque orifice (9) est situé à l'extrémité de l'injecteur correspondant, chaque injecteur (8) étant de longueur différente.

7. Dispositif selon l'une quelconque des revendications précédentes caractérisé en ce que la rotation du ruban (A) est en sens contraire du sens d'enroulement de l'hélice (6) qu'il forme.

## Claims

1. Apparatus for pressurising a foam charged with a powdery material, comprising a substantially cylindrical enclosure (1) which is resistant to the pressure and provided with an opening (2) for intake of the foam at atmospheric pressure and equipped with agitation means and means for introducing a compressed gas characterised in that the agitation means comprise a helicoidal strip (6) extending in the vicinity of the side walls of the enclosure (1) and driven in rotation in the interior of the enclosure while the means for introducing the gas under pressure comprise a central pipe means (7) for supplying the gas under pressure, along which pipe means are disposed hollow radial injectors (8) provided with at least one orifice (9) for distribution of the gas in the internal volume of the enclosure (1), the pipe means being coupled to a drive member for driving it in rotation about its axis in an opposite direction to that of the helicoidal strip (6).

2. Apparatus according to claim 1 characterised in that the strip (6) and the pipe means (7) are driven in such a way that the speed of rotation of the strip (6) is lower than that of the pipe means (7).

3. Apparatus according to claim 1 or claim 2 characterised in that the strip comprises a plurality of blades (10) extending radially in the direction of the gas supply pipe means (7).

4. Apparatus according to claim 3 characterised in that the radial injectors (8) are at different altitudes fro that of each of the radial blades (10).

5. Apparatus according to any one of the preceding claims characterised in that each injector orifice (9) is provided with a diffuser of porous material.

6. Apparatus according to claim 5 characterised in that each orifice (9) is disposed at the end of the corresponding injector, each injector (8) being of different length.

7. Apparatus according to any one of the preceding claims characterised in that the rotation of the strip (A) is in the opposite direction to the direction of coiling of the helix (6) that it forms.

## Patentansprüche

1. Vorrichtung zum Unterdrucksetzen eines Schaumes, der ein feinpulvriges Material enthält, umfassend einen im wesentlichen zylindrischen druckfesten Behälter (1), der mit einer Öffnung (2) zur Zufuhr des Schaumes bei Atmosphärendruck versehen und mit einer Rühreinrichtung und einer Zufuhreinrichtung für ein Druckgas ausgerüstet ist, dadurch **gekennzeichnet,** daß die Rühreinrichtung ein schraubenförmiges Band (6) umfaßt, das sich nahe den Seitenwänden des Behälters (1) erstreckt und innerhalb des Behälters (1) in Drehung versetzt wird, während die Zufuhreinrichtung für das Druckgas eine zentrale Rohrleitung (7) zum Zuführen des Druckgases umfaßt, entlang der radiale hohle Injektoren (8) mit mindestens einer Verteilerdüse (9) für das Gas in dem Innenraum des Behälters (1) eingesetzt sind, wobei die Rohrleitung mit einem Motororgan für ihren Antrieb um ihre Achse in einer zur Bewegungsrichtung des schraubenförmigen Bandes (6) entgegengesetzten Richtung gekoppelt ist.

2. Vorrichtung nach Anspruch 1, dadurch **gekennzeichnet,** daß das Band (6) und die Rohrleitung (7) derart angetrieben werden, daß die Drehgeschwindigkeit des Bandes (6) niedriger als die Drehgeschwindigkeit der Rohrleitung (7) ist.

3. Vorrichtung nach Anspruch 1 oder 2, dadurch **gekennzeichnet**, daß das Band eine Vielzahl von Fahnen (10) trägt, die sich radial in Richtung der zur Zufuhr des Gases dienenden Rohrleitung (7) erstreckt.

4. Vorrichtung nach Anspruch 3, dadurch **gekennzeichnet,** daß die radialen Injektoren (8) auf gegenüber der jeweiligen Höhe der radialen Fahnen (10) unterschiedlichen Höhen angeordnet sind.

5. Vorrichtung nach einem der vorhergehenden Ansprüche, dadurch **gekennzeichnet,** daß jede Injektoröffnung (9) mit einem Diffusor aus porösem Material ausgerüstet ist.

6. Vorrichtung nach Anspruch 5, dadurch **gekennzeichnet**, daß jede Öffnung (9) am Ende des entsprechenden Injektors angeordnet ist, wobei jeder Injektor (8) eine andere Länge hat.

7. Vorrichtung nach einem der vorhergehenden Ansprüche, dadurch **gekennzeichnet**, daß die Drehung des Bandes in einer Richtung (A) erfolgt, welche der Windungsrichtung der von dem Band gebildeten Schraube entgegengesetzt ist.
